# EUROPÄISCHE PATENTSCHRIFT

(11) **EP 3 572 850 B1**
(45) Veröffentlichungstag und Bekanntmachung des Hinweises auf die Patenterteilung: **03.04.2024**
(21) Anmeldenummer: 19163980.6
(22) Anmeldetag: 20.03.2019
(51) Int. Cl.: G02B 5/124, F21V 5/00, F21V 7/04, G01V 8/14

(54) **RETROREFLEKTORELEMENT**
RETROREFLECTOR ELEMENT
ÉLÉMENT RÉTRORÉFLECTEUR

(30) Priorität: 18.05.2018 DE 102018112045
(43) Veröffentlichungstag der Anmeldung: 27.11.2019
(73) Patentinhaber: IMOS Gubela GmbH, 77871 Renchen (DE)
(72) Erfinder: GUBELA, Hans-Erich, 77876 Kappelrodeck (DE)
(74) Vertreter: Patentanwälte Bregenzer und Reule Partnerschaftsgesellschaft mbB

(56) Entgegenhaltungen:
- EP-A1- 2 902 812
- DE-A1-102009 060 884
- DE-A1-102010 015 298
- DE-A1-102016 001 543

## Beschreibung

Die Erfindung befasst sich mit einem Retroreflektorelement für Sensoranordnungen, mit dem die Sensoranordnung sowohl bei Entfernungen in einem Nahbereich, als auch in einem Fernbereich funktioniert.

Sensoranordnungen basierend auf dem Lichtschrankenprinzip umfassen üblicherweise ein Sendeelement und ein Empfangselement einer elektromagnetischen Welle. Das Empfangselement ist dazu ausgelegt, die vom Sendeelement ausgesandte elektromagnetische Welle zu empfangen und zu detektieren. Die Detektion bzw. das Ausbleiben der Detektion wird üblicherweise in einem Signalverarbeitungselement z.B. einem Mikroprozessor, einer elektronischen Schaltung oder einfach einem Relais ausgewertet. Die Wellenlänge oder der Wellenlängenbereich des Sendeelements ist auf die Wellenlänge oder den Wellenlängenbereich des Empfangselements abgestimmt. Je nach gewünschter Anwendung kann beispielsweise im Infrarotbereich, im Bereich des sichtbaren Lichts oder im UV Bereich gearbeitet werden. Zur Vermeidung der Detektion von Fremdstrahlung kann auch mit unterschiedlichen Polarisationsrichtungen gearbeitet werden, wie z.B. in der DE 10 2014 013 326 A (Anmelderin: Imos Gubela GmbH) vorgeschlagen wird.

Häufig ist es gewünscht, dass das Sendeelement und das Empfangselement kompakt in einem Bauteil, also möglichst direkt nebeneinander, angeordnet sind. Ein Lichtschrankensystem mit nebeneinander angeordneten Sende- und Empfangselement benötigt einen Retroreflektor, der den von dem Sendeelement ausgesandten Strahl wieder in sich zurück reflektiert. Sensoranordnungen mit einem Retroreflektor zwischen dem Sende- und dem Empfangselement sind dem Fachmann bekannt (siehe z.B. die bereits zitierte DE 10 2014 013 326 A1).

Retroreflektoren können unterschiedliche Geometrien aufweisen. Beispielsweise sind Retroreflektoren bekannt, die auf Glaskugeln beruhen, die auch als Katzenaugen bezeichnet werden. Für Sensoreinrichtungen, die in einem Fernbereich arbeiten, also bei Abständen zwischen dem Sendeelement und dem Retroreflektor von mehr als 10 Meter, insbesondere von mehr als 50 Metern, haben solche Katzenaugen jedoch einen zu geringen Wirkungsgrad der Retroreflektion. Auch Tripelstrukturen mit einer Anordnung von 3 nahezu, also innerhalb der Fertigungstoleranzen, senkrecht aufeinderstehenden Seitenflächen, die eine pyramidale Struktur haben (siehe Fig 3 der DE 197 27 527 C2 Inhaber: Hans Erich Gubela sen.) haben für die Anwendung im Fernbereich Probleme mit dem Wirkungsgrad, weil die Pyramidenstruktur aufgrund von Totflächen nur einen Wirkungsgrad bis zu ca.70 % zulassen.

Für die Anwendung in Sensoreinrichtungen im Fernbereich haben sich nur Reflektorgeometrien mit einer Full-Cube Würfelstruktur wie in Figur 4 der DE 197 27 527 C2 (Inhaber: Hans Erich Gubela sen.), die eine sechseckige Grundform aufweisen, oder mit einer Cut-Twice-Geometrie mit einer rechteckigen vorzugsweise quadratischen Grundform der Tripel, wie sie z.B. in den Figuren 13 und 14 der DE 44 109 94 A1 dargestellt sind, als geeignet erwiesen. Nur diese Geometrien weisen einen hinreichenden Retroreflektionsgrad auf. Als Grundform ist eine Projektion in eine Ebene zu verstehen, die von Vektoren aufgespannt wird, entlang derer die Tripel regelmäßig gitterartig angeordnet sind. In der Cut-Twice-Geometrie ist eine erste Seitenfläche der Tripel durch eine längs aus einem Quader verlaufende Hauptnut gebildet und die zweite und dritte Seitenfläche der Tripel durch eine Serie normal zu der ersten Seitenfläche und parallel zueinander verlaufenden Nebennuten. Mehrere solcher Quader sind dabei nebeneinander angeordnet.

Die DE 197 27 527 C2 (Inhaber: Hans Erich Gubela sen.) schlägt zur Beobachtung eines Retroreflektors aus unterschiedlichen Entfernungen vor, im Zentrum des Retroreflektors eine kleine Fläche mit Tripeln mit kleineren Abmessungen vorzusehen als die Tripel in einem größeren Randbereich. Es wird in der DE 197 27 527 C2 allerdings nicht berücksichtigt, dass in einer Sensoreinrichtung, die im Nahbereich in einem zu engen Winkelbereich retroreflektiert, der reflektierte Strahl wieder direkt in das Sendeelement zurückgeworfen wird und im benachbarten Empfangselement keine Leistung detektiert werden kann. Die DE 197 27 527 C2 hat das Ziel, jegliche Strahlaufweitung des retroreflektierten Strahls zu vermeiden.

Aus dem Straßenverkehr sind hingegen Retroreflektoren bekannt, die im Nahbereich eine hinreichende Winkelaufweitung des reflektierten Strahls zeigen, jedoch für die Verwendung im Fernbereich einer Sensoranordnung, wie einer Lichtschranke, ungeeignet sind, weil die Reflektionsleistung in der Ferne nicht ausreicht. Ein Beispiel ist in der EP 1 032 031 B1 (Inhaberin: Avery Dennison Corporation) gegeben, in der retroreflektierende Folien beschrieben sind. Aufgrund der erforderlichen Beweglichkeit der Folien ist in der EP 1 932 031 B1 nur die Verwendung von Retroreflektoren in der Pyramidengeometrie beschrieben. Diese Geometrie hat jedoch aufgrund der Totflächen einen Reflektionsgrad von maximal ca. 70 %. Auch ein in der DE 10 2016 117 023 A1 (Anmelderin: Imos Gubela GmbH) offenbarter Retroreflektor ist nur bedingt für die Verwendung im Fernfeld einer Sensoranordnung geeignet, weil die Winkelaufweitung durch absichtlich eingeführte Abweichungen der Winkel zwischen den Seitenflächen der Tripel zu groß wird.

Aus der DE 10 2016 001 543 A1 ist ein Retroreflektor gemäß Oberbegriff des Anspruchs 1 bekannt, der Licht mit einem Abstrahlwinkel von 20 Bogenminuten retroreflektiert. Aus der EP 2 902 812 A1 ist ein Retroreflektor bekannt, dessen gesamte Lichteintrittsfläche von einer strahlaufweitenden Struktur bedeckt wird. Weitere Retroreflektoren sind beispielsweise aus der DE 10 2010 015 298 A1 und der DE 10 2009 060 884 A1 bekannt.

Der Erfindung liegt die Aufgabe zugrunde, ein Retroreflektorelement für einen Sensor zu schaffen, das bei der Reflektion eines Strahl in einem Nahbereich, also einer Entfernung zwischen Sendeelement und dem Retroreflektorelement von weniger als 50 cm, eine Strahlaufweitung erzeugt, die ausreicht, dass in einem direkt neben dem Sendeelement angeordneten Empfangselement der retroreflektierte Strahl detektiert werden kann, und das auch bei der Reflektion eines Strahls im Fernbereich, also einer Entfernung zwischen Sendeelement und dem Retroreflektorelement von mehr als 10 m, bevorzugt mehr als 20 m, besonders bevorzugt mehr als 100 m, immer noch einen detektierbaren Strahl auf das Empfangselement zurückwirft. Optimalerweise bleibt auch in einem Übergangsbereich also bei einer Entfernung zwischen dem Sendeelement und dem Retroreflektorelement zwischen 50 cm und 10 m die zurückgeworfene Signalstärke näherungsweise konstant.

Diese Aufgabe wird durch ein Retroreflektorelement nach Anspruch 1 gelöst. Eine entsprechende Sensoranordnung ist in Anspruch 16 dargestellt. Vorteilhafte Weiterbildungen lassen sich den abhängigen Ansprüchen entnehmen.

Eine erfindungsgemäße Sensoranordnung umfasst ein Sendeelement, ein neben dem Sendeelement angeordnetes Empfangselement, ein Retroreflektorelement, das vorzugsweise beweglich in einem Abstand zwischen 25 cm und mehr als 10 m, besonders bevorzugt beweglich bis zu 100 m von dem Sendelement angeordnet werden kann, und ein Signalverarbeitungselement zur Auswertung und/oder Weiterleitung eines von dem Empfangselement empfangenen Signals.

Das Sendeelement sendet ein Signal in Form einer elektromagnetischen Welle, z.B. im Infrarot, im Bereich des sichtbaren Lichts oder im UV-Bereich mit einer spezifischen Abstrahlcharakteristik aus. Das Sendeelement kann beispielsweise ein Lambertstrahler oder ein Laserstrahl sein. Die Abstrahlcharakteristik kann auch kegelförmig sein, und einen charakteristischen Abstrahlwinkel aufweisen. Der Abstrahlwinkel entspricht dem halben Öffnungswinkel des Lichtkegels. Typische Abstrahlwinkel sind zwischen 1° und 10°. Damit bei Anwendung der Sensoranordnung im Fernbereich noch möglichst viel Licht auf das Retroreflektorelement trifft, ist der Abstrahlwinkel des Sendeelements möglichst klein, also ca. 1° bis 1,5 °, zu wählen. Bei einem Abstrahlwinkel von 1 ° hätte der Öffnungskegel in einem Abstand von 10 m einen Durchmesser von ca. 34 cm.

Das Empfangselement ist bei einer Reflektionslichtschranke üblicherweise in einem Gehäuse mit dem Sendeelement angeordnet. D.h. das Empfangselement ist abhängig von der Bauform höchstens 5 cm, bevorzugt höchstens 2 cm vom Sendeelement beabstandet. Das Empfangselement befindet sich also neben dem Sendeelement. Als Empfangselement kann beispielsweise eine Photozelle, ein Photomultiplier, ein optischer Halbleitersensor oder ein Photowiderstand dienen.

Die Winkelverteilung der Retroreflektion hängt im Wesentlichen von den Winkelfehlern der 3 nahezu senkrecht aufeinanderstehenden Seitenflächen zueinander ab, also von den Abweichungen der dihedralen Winkel vom idealen 90°-Winkel. Dieser Effekt ist beispielsweise im Artikel "Study of Light Deviation Errors in Triple Mirrors and Tedrahedral Prisms" von P. R. Yoder, Journal of the optical society of America, Vol. 48, Nr. 7, Seiten 496 - 499, Juli 1958 beschrieben. Die Abweichungen vom rechten Winkel sind zumindest im zweiten Bereich möglichst klein zu halten, bzw. es ist sogar innerhalb der Fertigungstoleranzen anzustreben, exakt den rechten Winkel zu treffen. Die Fertigungstoleranzen betragen sind kleiner als 1,5°, bevorzugt kleiner als 20 Bogenminuten, besonders bevorzugt kleiner als 2 Bogenminuten. Diese Winkelaufweitung ist dafür verantwortlich, dass bei einem im Vergleich zum Sendeelement räumlich versetzten Empfangselement überhaupt ein Signal messbar ist. Ein perfekter Retroreflektor würde den einfallenden Strahl, bis auf einen kleinen Versatz, immer parallel zu sich selbst zurückwerfen und damit wieder in das Sendeelement schicken. Ein erfindungsgemäßer Retroreflektor strahlt mindestens 90 % des reflektierten Lichts, das auf seinem Lichtweg nicht aufgeweitet wird, also das auf keine strahlaufweitende Struktur trifft, innerhalb eines Lichtkegels mit einem Abstrahlwinkel kleiner 20 Bogenminuten ab. D.h. das Verhältnis der innerhalb des Lichtkegels von 20 Bogenminuten abgestrahlten Energie zur innerhalb des gesamten Halbraum abgestrahlten Energie beträgt mindestens 0,9. Messtechnisch kann dies z.B. verifiziert werden, indem bei verschiedenen Beobachtungswinkeln der Rückstrahlwert in mcd/lux gemessen wird (siehe DIN 67520) und die gemessene Kurve dann über den Raumwinkel integriert wird. Alternativ kann auch direkt die Strahlungsleistung gemessen werden.

Befindet sich das Retroreflektorelement in einem Nahbereich, also in ca. 50 cm Abstand zum Empfangselement, beträgt der erforderliche Winkel zwischen einfallendem und reflektiertem Strahl ca. 2,3°, damit ein vom Sendeelement um 2 cm beabstandetes Empfangselement ein Signal empfängt. Im Nahbereich ist also eine Winkelaufweitung des reflektierten Strahls erforderlich.

Diese Winkelaufweitung wird am einfachsten durch eine winkelaufweitende Struktur erreicht. Die winkelaufweitende Struktur kann sich auf der Vorderseite oder der Rückseite in den Seitenflächen der Tripel befinden. Als Vorderseite wird eine Lichteintrittsseite des Retroreflektorelements bezeichnet. Erfindungsgemäß sind höchstens 20 % der Fläche der Vorderseite oder der Rückseite des Retroreflektorelements von den Strukturen zur Aufweitung des retroreflektierten Strahls bedeckt. Gemäß einer vorteilhaften Ausführungsform der Erfindung sind mindestens 0,1 % und höchstens 10 %, besonders bevorzugt höchstens 5 % der Fläche der Vorderseite des Retroreflektorelements von den Strukturen zur Aufweitung des retroreflektierten Strahls bedeckt. Je kleiner der von der Strahlaufweitung bedeckte Bereich ist, desto weniger Reflektionsleistung geht im Fernbereich der erfindungsgemäßen Sensoranordnung verloren und desto weiter entfernt kann das Retroreflektorelement vom Sensor maximal angeordnet werden, damit das Empfangselement noch einen reflektierten Strahl detektieren kann. Die Untergrenze der durch die Aufweitungsstruktur bedeckten Fläche ist durch die Detektionsgrenze des Empfangselements im Nahbereich festgelegt.

An der Vorderseite des erfindungsgemäßen Retroreflektorelements tritt ein einfallender Lichtstrahl in das Retroreflektorelement ein, trifft auf seinem Lichtweg, entweder beim Eintritt auf der Vorderseite oder auf der Rückseite ggf. auf die Struktur zur Aufweitung des Strahls, wird dort abgelenkt, gelangt zu einer Rückseite des Retroreflektorelements, auf der eine regelmäßige Anordnung aus einer Vielzahl von Tripeln vorgesehen ist, die jeweils drei nahezu senkrecht aufeinanderstehende Seitenflächen aufweisen, wird an jeder der drei Seitenflächen vorzugsweise mittels Totalreflektion reflektiert, wird etwas versetzt näherungsweise in sich selbst zurückreflektiert, gelangt wieder zur Vorderseite, trifft auf dem Lichtweg ggf. wieder auf die Struktur zur Aufweitung des Strahls wird wieder abgelenkt und tritt wieder aus dem Retroreflektorelement aus. Durch die Aufweitung des Lichtkegels werden Strahlen erzeugt, die, auch wenn sich das Retroreflektorelement im Nahbereich befindet, zum Empfangselement gelangen und dort mittels des Signalverarbeitungselements erfasst werden.

Gemäß einer Ausführungsform der Erfindung ist die Struktur nur bereichsweise vorgesehen, z.B. an den Stellen, an denen das vom Sendeelement ausgesandte Signal im Nahbereich des erfindungsgemäßen Sensorelements auf das Retroreflektorelement trifft. Dadurch können unnötige Verluste der Reflektionsleistung im Fernbereich vermieden werden.

Es ist weiter vorteilhaft, wenn die aufweitende Struktur nur in einem Zentralbereich des erfindungsgemäßen Retroreflektorelements vorgesehen ist. Möglichst sollte nur der Bereich bedeckt sein, der im Nahbereich der Sensoranordnung vom Signal, das vom Sendeelement ausgesandt wird, erfasst wird. Dieser Bereich befindet sich vorteilhafterweise mittig im Retroreflektorelement. Zur Vermeidung von Funktionsbeeinträchtigungen der erfindungsgemäßen Sensoranordnung bei leichten Erschütterungen sowie für eine gute Funktionsweise im Übergangsbereich kann der Zentralbereich auch einen um den Faktor 1,5 bis 2 größeren Durchmesser als das vom Signal im Nahbereich der Sensoranordnung erfasste Gebiet haben. Bei einem Sendeelement, das das Signal kegelförmig aussendet und bei einer Ausrichtung des Retroreflektorelements normal zur Hauptausbreitungsrichtung des ausgesandten Strahls ist der Zentralbereich kreisrund.

Der Betrag, um den die Struktur zur Aufweitung des retroreflektierten Strahls den Abstrahlwinkel aufweitet, kann nach Unterbereichen, z.B. ringförmig, gestaffelt sein, um auch im Übergangsbereich der Sensoranordnung eine gute Ausleuchtung des Empfängers zu gewährleisten.

Es sind aber auch Anwendungen denkbar, in denen mehrere Sendeelemente vorgesehen sind oder das Sendeelement auch im Nahbereich das gesamte Reflektorelement beleuchtet oder, wie in der DE 10 2014 013 326 A beschrieben, mit unterschiedlichen Polarisationen gearbeitet wird, bei denen mehrere Eingangsstrahlen im Nahbereich der Sensoranordnung aufgeweitet werden müssen. In diesen Fällen ist es vorteilhaft, wenn die strahlaufweitenden Strukturen in einem regelmäßigen Muster bereichsweise oder über das gesamte Retroreflektorelement angeordnet sind.

Für Spezialanwendungen kann auch jedem Tripel eine Projektionsfläche auf der Vorderseite zugeordnet sein. Jede dieser Projektionsflächen ist dann teilweise von der Struktur zur Aufweitung des retroreflektierten Strahls bedeckt. Dabei können auch einzelne Tripel ausgelassen werden. Dies ist vor allem dann von Interesse, wenn jeder Tripel einem Pixel eines Messsystems entspricht.

Äquivalent dazu kann die strahlaufweitende Struktur auch auf der Rückseite in einzelnen Seitenflächen ausgewählter Tripel vorhanden sein, z.B. indem in ein Formwerkzeug zur Abformung der Tripel mit einem Laser kleine zylinderförmige Vertiefungen in einzelne Seitenflächen einzelner Tripel eingebracht werden. In einem daraus abgeformten Retroreflektor können diese Vertiefungen dann entweder negativ als reliefartige, d.h. nach außen wölbende Erhebungen oder bei zweifacher Abformung positiv als Vertiefungen ausgebildet sein. Diese zylinderförmigen Vertiefungen haben bevorzugt eine Breite kleiner 1/3 der Schlüsselweite der Tripel. In der Cut-Twice-Geometrie verläuft die strahlaufweitende Nut vorteilhafterweise parallel zur Hauptnut der Tripel-Geometrie.

Es ist auch denkbar, dass nur über oder an einer der drei Seitenflächen eines Tripels eine Struktur zur Strahlaufweitung angeordnet ist, z.B. dass in der Cut-Twice-Geometrie eine zylinderförmige Struktur entlang der Hauptnut verläuft. Dadurch kann auch erreicht werden, dass der Strahl bei der Retroreflektion höchstens einmal auf die strahlaufweitende Struktur trifft, entweder beim Eintritt in das Retroreflektorelement oder beim Austritt aus dem Retroreflektorelement.

Eine Anordnung von Zylinderlinsen als Strahl aufweitende Struktur kann gezielt dazu genutzt werden, den retroreflektierten Strahl nur in eine Raumrichtung aufzuweiten, und damit die Aufweitung in der Richtung vorzunehmen in der das Sende- und das Empfangselement der Sensoranordnung gegeneinander versetzt sind.

Gemäß einem weiteren vorteilhaften Aspekt der Erfindung bildet der retroreflektierte Strahl nach der Aufweitung an der Struktur einen Lichtkegel mit einem Abstrahlwinkel zwischen 0,5° und 5°, vorzugsweise zwischen 1° und 3°.

Weiter ist es von Vorteil, wenn die Struktur zur Aufweitung des retroreflektierten Strahls eine sich regelmäßig wiederholende mathematische beschreibbare Funktion in Abhängigkeit vom Ort auf der Vorderseite des Retroreflektorelements ist. Bevorzugt weist die Struktur mindestens eines der folgenden Elemente auf: Mikrolinsenarray, insbesondere eine Anordnung von Zylinderlinsen, Gräben und/oder sinusförmige Erhebungen. Ein Mikrolinsenarray mit sphärischen oder asphärischen Mikrolinsen ist geeignet, wenn das Empfangselement ringartig um das Sendeelement angeordnet ist. Wenn die Aufweitung des reflektierten Strahls nur in einer Richtung erfolgen soll, d.h. in der Ebene, die von der Vorderseite des Retroreflektorelements gebildet wird, der einfallende Strahl nur unter einem Polarwinkel abgelenkt werden soll, bzw. das reflektierte Strahlenbündel eine gerade Linie bilden soll, ist die Verwendung einer regelmäßigen Struktur von Zylinderlinsen oder von definierten Gräben oder sinusartigen Oberflächenstrukturen sinnvoll. Der Winkel, der zwischen einem einfallenden und einem reflektierten Strahl eingeschlossen wird, hängt insbesondere von folgenden Parametern ab: Periodenlänge der sich wiederholenden Struktur, also deren Gitterkonstante, lokaler bzw. maximaler Krümmungsradius (dabei sind konkave und konvexe Krümmungen möglich) des Mikrolinsenarrays. Die Periodenlänge lässt sich auch in eine numerische Apertur einer einzelnen Mikrolinse umrechnen. Die Periodenlänge ist vorteilhafterweise um einen ganzzahligen Faktor von mindestens drei größer als eine Schlüsselweite der Tripel, so dass jeder Tripel im Bereich mit der Struktur zur Aufweitung des retroreflektierten Strahls mit mindestens drei Mikrolinsenstrukturen bedeckt ist.

Es ist ebenfalls denkbar, dass die Struktur zur Aufweitung des retroreflektierten Strahls eine unregelmäßige Struktur ist, die einfallendes Licht diffus streut. Bei diskreten Positionen entlang des Nahbereichs kann als strahlaufweitende Struktur auch ein diffraktives Element verwendet werden.

Vorteilhafterweise ist das Retroreflektorelement aus einem für den gewünschten Wellenlängenbereich transparenten Material, das sich im Spritzgussverfahren verarbeiten lässt. Im sichtbaren Bereich und im IR-Bereich sind dies Polymethylmethacrylat (PMMA) und Polycarbonat (PC), im UV-Bereich hat sich ein optisches Silikon (liquid silicone rubber) als geeignet erwiesen (siehe die zum Anmeldezeitpunkt noch unveröffentlichte Anmeldung mit dem Aktenzeichen DE 10 2018 101 291.6).

Die nachfolgenden Figuren sollen das Prinzip einer erfindungsgemäßen Sensoranordnung bzw. eines erfindungsgemäßen Retroreflektors ohne Beschränkung der Allgemeinheit der Erfindung verdeutlichen. Dabei zeigen:
- Figur 1: den schematischen Aufbau einer erfindungsgemäßen Sensoranordnung,
- Figur 2: eine Ausführungsform eines erfindungsgemäßen Retroreflektorelements.

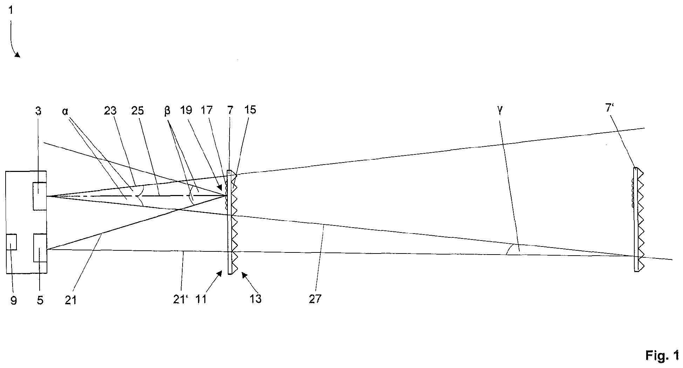

Fig. 1 zeigt nicht maßstabsgetreu den schematischen Aufbau einer erfindungsgemäßen Sensoranordnung 1. Ein Sendeelement 3 und ein Empfangselement 5 sind mit einem Signalverarbeitungselement 9 in einem Gehäuse (ohne Bezugszeichen) angeordnet. Ein Retroreflektorelement 7, 7' ist symbolisch in einer ersten Position 7 und einer zweiten Position 7' dargestellt. Die erste Position des Retroreflektorelements 7 entspricht dem Nahbereich der Sensoranordnung 1, d.h. einem Abstand zwischen Sendeelement und Retroreflektorelement 7 von ca. 25-50 cm. Die zweite Position des Retroreflektorelements 7' entspricht dem Fernbereich der Sensoranordnung 1, also einem Abstand von mehr als 10 m, vorzugsweise mehr als 50 m, besonders bevorzugt mehr als 100 m. Bei zu großen Abständen ist allerdings kein Signal mehr detektierbar. Das Retroreflektorelement 7,7' ist vorzugsweise zwischen der ersten und der zweiten Position beweglich, z.B. mit einer nicht dargestellten Bewegungseinheit auf nicht dargestellten Schienen. Es kann eine nicht dargestellte Positionsbestimmungseinheit des Retroreflektorelements 7, 7' vorgesehen sein, die dem Signalverarbeitungselement 9 Positionsdaten des Retroreflektorelements 7,7' liefert.

Das Retroreflektorelement 7,7' hat eine Vorderseite 11 und eine Rückseite 13. Auf der Rückseite 13 ist eine regelmäßige Anordnung einer Vielzahl von Tripeln 15 vorgesehen. Die Tripel 15 sind in der Full-Cube-Geometrie, bei der die Kanten jedes Tripels 15 eine Projektion auf die Vorderseite 11 und/oder auf die Rückseite 13 in Form eines gleichseitigen Sechsecks aufweisen oder in der Cut-Twice-Geometrie, bei der die Kanten jedes Tripels 15 eine Projektion auf die Vorderseite 11 und/oder auf die Rückseite 13 in Form eines Quadrats oder eines Rechtecks aufweisen, angeordnet, wobei die die Tripel bildenden Seitenflächen im Rahmen der erzielbaren Fertigungsgenauigkeit möglichst exakt senkrecht zueinander stehen. Die Vorderseite 11 des Retroreflektorelements 7, 7' ist in mehrere Bereiche unterteilt. In einem Bereich 17 ist eine Struktur 19 vorgesehen, die einen retroreflektierten Strahl aufweitet. Die Struktur 19 kann beispielsweise aus einem Zylinderlinsenarray bestehen.

Das Sendeelement 3 emittiert ein Lichtsignal, das sich kegelförmig mit einem ersten Abstrahlwinkel α ausbreitet. Der Abstrahlwinkel α entspricht dem halben Öffnungswinkel des Lichtkegels 23 des Lichtsignals, in dessen Mitte sich ein Zentralstrahl 25 befindet. Im Nahbereich des Retroreflektorelements 7 entspricht die vom Sendeelement 3 ausgeleuchtete Fläche in etwa der Fläche des Bereichs 17. Das vom Sendeelement 3 ausgehende Licht wird an der Rückseite 13 des Retroreflektorelements 7 von den Tripeln reflektiert und passiert zweimal die aufweitende Struktur 19, wie beispielhaft für den Zentralstrahl 25 gezeigt. Dadurch wird der Abstrahlwinkel β des retroreflektierten Lichts so vergrößert, dass dieses auf das Empfangselement 5 trifft. Dies ist in Fig. 1 beispielhaft dadurch gezeigt, dass der Zentralstrahl 25 bei der Retroreflektion zu einem retroreflektierten Lichtkegel mit einem Öffnungswinkel 2β aufgeweitet wird, wobei ein retroreflektierter Strahl 21 im Mantel des retroreflektierten Lichtkegels das Empfangselement 5 trifft.

Im Fernbereich des Retroreflektorelements 7' wird nahezu das gesamte Retroreflektorelement 7' vom Sendeelement 3 beleuchtet. Im Fernbereich ist die ohnehin vorhandene fertigungsbedingte Abweichung der Seitenflächen der Tripel 15 vom gegenseitigen rechten Winkel ausreichend, um eine kleine Winkelabweichung γ eines retroreflektierten Strahls 21' hervorzurufen, sodass genügend Licht von der gesamten Fläche des Retroreflektorelements 7' in das Empfangselement 5 gelangt, und anschließend vom Signalverarbeitungselement 9 erkannt wird, wie wieder beispielhaft für einen Strahl 27 gezeigt wird, der im Mantel des Lichtkegels 23 verläuft.

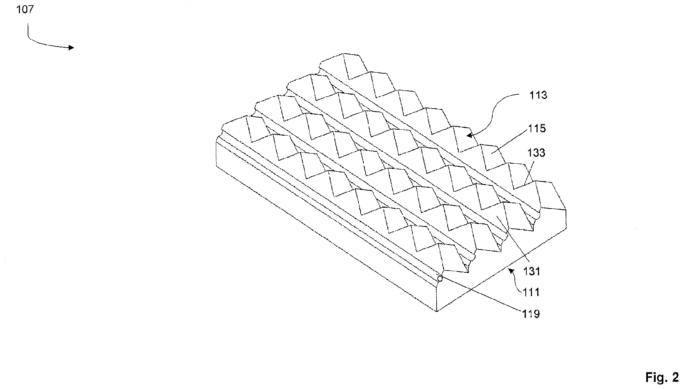

Fig. 2 zeigt eine beispielhafte Ausführungsform eines erfindungsgemäßen Retroreflektorelements 107. Die Lichteintrittsfläche und damit die Vorderseite 111 des Retroreflektorelements ist in der gewählten Darstellung nicht sichtbar. Die strahlaufweitenden Strukturen 119 befinden sich auf der Rückseite 113 des Retroreflektorelements. Das Retroreflektorelement weist eine Cut-Twice-Geometrie auf, d.h. die lichtreflektierenden Tripel 115 sind durch Hauptnuten 131 und eine Serie parallel dazu verlaufender Nebennuten 131 definiert. Die strahlaufweitenden Strukturen 119 sind durch zylinderförmige Einkerbungen gebildet. Für die strahlaufweitende Funktion der Strukturen 119 spielt es keine Rolle, ob diese konkav oder konvex ausgebildet sind. Hier verlaufen diese Strukturen 119 als Einkerbungen parallel zu den Hauptnuten 131. Es sind auch andere Orientierungen denkbar, die an die Lage des Empfangselements in der erfindungsgemäßen Sensoranordnung angepasst sein sollte.

### Bezugszeichenliste

| | |
|---|---|
| 1 | Sensoranordnung |
| 3 | Sendeelement |
| 5 | Empfangselement |
| 7, 107 | Retroreflektorelement in einer ersten Position |
| 7' | Retroreflektorelement in einer zweiten Position |
| 9 | Signalverarbeitungselement |
| 11, 111 | Vorderseite |
| 13, 113 | Rückseite |
| 15, 115 | Tripel |
| 17 | Bereich des Retroreflektorelements |
| 19, 119 | Struktur |
| 21,21' | retroreflektierter Strahl |
| 23 | Lichtkegel |
| 25 | Zentralstrahl |
| 27 | Strahl |
| 131 | Hauptnut |
| 133 | Nebennut |
| α | Abstrahlwinkel des Sendeelements |
| β | Aufweitungswinkel der Struktur |
| γ | Aufweitungswinkel der Tripel |

## Patentansprüche

1. Retroreflektorelement (7, 7', 107) zur Verwendung in einem Nahbereich und in einem Fernbereich einer Sensoranordnung (1)
mit einer Lichteintrittseite als Vorderseite (11, 111) und einer im Abstand zur Lichteintrittsseite angeordneten Rückseite (13, 113), wobei auf der Rückseite (13, 113) eine regelmäßige Anordnung aus einer Vielzahl von Tripeln (15, 115) vorgesehen ist, die jeweils drei nahezu senkrecht aufeinanderstehende Seitenflächen aufweisen, wobei die Kanten jedes Tripels (15, 115) eine Projektion auf die Vorderseite (11, 111) und/oder auf die Rückseite (13, 113) in Form eines gleichseitigen Sechsecks, eines Quadrats oder eines Rechtecks aufweisen und wobei die Winkel zwischen den Seitenflächen maximal derart von rechten Winkeln abweichen, dass mindestens 90 % des Lichts, das in seinem Strahlengang nicht auf die Struktur (19, 119) trifft, innerhalb eines Lichtkegels mit einem Abstrahlwinkel kleiner 20 Bogenminuten retroreflektiert abgestrahlt wird, **dadurch gekennzeichnet, dass** höchstens 20 % der Fläche der Vorderseite (11, 111) oder der Rückseite (13, 113) eine Struktur (19, 119) zur Aufweitung eines retroreflektierten Strahls (21,21`) aufweist.

2. Retroreflektorelement (7, 7', 107) nach Anspruch 1, wobei mindestens 0,1 % und höchstens 10 % der Fläche der Vorderseite (11, 111) oder der Rückseite (13, 113) des Retroreflektorelements (7, 7', 107) von der Struktur (19, 119) zur Aufweitung des retroreflektierten Strahls (21,21`) bedeckt ist.

3. Retroreflektorelement (7, 7', 107) nach Anspruch 1 oder 2, wobei mindestens ein erster Bereich (17) vorgesehen ist, der die Struktur (19, 119) zur Aufweitung des retroreflektierten Strahls (21,21') aufweist, und mindestens ein zweiter Bereich vorgesehen ist, in dem keine strahlaufweitende Struktur vorgesehen ist.

4. Retroreflektorelement (7, 7', 107) nach Anspruch 3, wobei der erste Bereich (17) mit der Struktur (19, 119) ein Zentralbereich des Retroreflektorelements (7, 7', 107) ist.

5. Retroreflektorelement (7, 7', 107) nach Anspruch 1 oder 2, wobei die Struktur (19, 119) in einem Muster über die Vorderseite (11, 111) oder die Rückseite (13, 113) des Retroreflektorelements (7, 7', 107) verteilt ist.

6. Retroreflektorelement (7, 7', 107) nach einem der Ansprüche 1 bis 5, wobei die Struktur zur Aufweitung des retroreflektierten Strahls auf der Vorderseite (11, 111) des Retroreflektorelements angeordnet ist.

7. Retroreflektorelement (7, 7', 107) nach Anspruch 6, wobei jedem Tripel (15, 115) eine Projektionsfläche auf der Vorderseite (11, 111) zugeordnet wird, wobei jede Projektionsfläche zumindest teilweise mit der Struktur (19, 119) bedeckt ist.

8. Retroreflektorelement (7, 7', 107) nach Anspruch 7, wobei die jedem Tripel zugeordnete Projektionsfläche auf der Vorderseite in drei Teilprojektionsflächen aufteilbar ist, wobei jede Teilprojektionsfläche der Projektion einer Seitenfläche des Tripels entspricht und nur eine Teilprojektionsfläche pro Tripel mit der Struktur (21,21') zur Aufweitung des retroreflektierten Strahls (21,21') bedeckt ist.

9. Retroreflektorelement (7, 7', 107) nach einem der Ansprüche 1 bis 5, wobei die Struktur zur Aufweitung des retroreflektierten Strahls auf der Rückseite (11, 111) des Retroreflektorelements angeordnet ist.

10. Retroreflektorelement (7, 7', 107) nach Anspruch 9, wobei die Struktur gezielt in einzelne Seitenflächen der Tripel (15, 115) auf der Rückseite (13, 113) eingebrachte reliefartige Vertiefungen oder Erhöhungen aufweist.

11. Retroreflektorelement (7, 7', 107) nach Anspruch 10, wobei die Vertiefungen oder Erhöhungen zylinderförmig ausgestaltet sind.

12. Retroreflektorelement (7, 7', 107) nach einem der Ansprüche 1 bis 11, wobei die Struktur (19, 119) derart gestaltet ist, dass der retroreflektierte Strahl (21) nach der Aufweitung an der Struktur (19, 119) einen Lichtkegel mit einem Abstrahlwinkel zwischen 0,5° und 5° bildet.

13. Retroreflektorelement (7, 7', 107) nach einem der Ansprüche 1 bis 12, wobei die Struktur (19, 119) zur Aufweitung des retroreflektierten Strahls (21, 21') durch eine sich regelmäßig wiederholende mathematische Funktion in Abhängigkeit vom Ort auf der Vorderseite (11, 111) oder der Rückseite (13, 113) des Retroreflektorelements (7, 7', 107) beschreibbar ist.

14. Retroreflektorelement (7, 7', 107) nach Anspruch 13, wobei eine Periodenlänge der sich regelmäßig wiederholenden Funktion um mindestens den Faktor 2 kleiner ist, als eine Schlüsselweite der Tripel (15, 115).

15. Retroreflektorelement (7, 7', 107) nach einem der Ansprüche 1 bis 12, wobei die Struktur (19, 119) zur Aufweitung des retroreflektierten Strahls eine unregelmäßige Struktur ist, die einfallendes Licht diffus streut.

16. Sensorsoranordnung (1) umfassend
ein Sendeelement (3),
ein neben dem Sendeelement angeordnetes Empfangselement (5),
ein Retroreflektorelement (7, 7', 107) nach einem der vorherigen Ansprüche, und ein Signalverarbeitungselement (9).

## Claims

1. A retroreflector element (7, 7', 107) for use at short range and at long range of a sensor arrangement (1) having a light entry side as a front side (11, 111) and a rear side (13, 113) arranged at a distance to the light entry side, wherein a regular arrangement made up of a large number of triples (15, 115) is provided on the rear side (13, 113), which each have three lateral surfaces standing nearly perpendicular to one another, wherein the edges of each triple (15, 115) have a projection on the front side (11, 111) and/or on the rear side (13, 113) in the form of an equilateral hexagon, a square, or a rectangle, and wherein the angles between the lateral surfaces deviate at most from right angles such that at least 90% of the light which is not incident in its beam path on the structure (19, 119) is emitted retroreflected within a light cone having an emission angle less than 20 arc minutes, **characterized in that** at most 20% of the surface area of the front side (11, 111) or the rear side (13, 113) has a structure (19, 119) for expanding a retroreflected beam (21, 21').

2. The retroreflector element (7, 7', 107) according to Claim 1, wherein at least 0.1% and that most 10% of the surface area of the front side (11, 111) or the rear side (13, 113) of the retroreflector element (7, 7', 107) is covered by the structure (19, 119) for expanding the retroreflected beam (21, 21').

3. The retroreflector element (7, 7', 107) according to Claim 1 or 2, wherein at least one first area (17) is provided, which has the structure (19, 119) for expanding the retroreflected beam (21, 21'), and at least one second area is provided, in which no beam-expanding structure is provided.

4. The retroreflector element (7, 7', 107) according to Claim 3, wherein the first area (17) having the structure (19, 119) is a central area of the retroreflector element (7, 7', 107).

5. The retroreflector element (7, 7', 107) according to Claim 1 or 2, wherein the structure (19, 119) is distributed in a pattern over the front side (11, 111) or the rear side (13, 113) of the retroreflector element (7, 7', 107).

6. The retroreflector element (7, 7', 107) according to any one of Claims 1 to 5, wherein the structure for expanding the retroreflected beam is arranged on the front side (11, 111) of the retroreflector element.

7. The retroreflector element (7, 7', 107) according to Claim 6, wherein each triple (15, 115) is assigned a projection surface on the front side (11, 111), wherein each projection surface is at least partially covered by the structure (19, 119).

8. The retroreflector element (7, 7', 107) according to Claim 7, wherein the projection surface assigned to each triple on the front side can be divided into three partial projection surfaces, wherein each partial projection surface corresponds to the projection of one lateral surface of the triple and only one partial projection surface per triple is covered by the structure (21, 21') for expanding the retroreflected beam (21, 21').

9. The retroreflector element (7, 7', 107) according to any one of Claims 1 to 5, wherein the structure for expanding the retroreflected beam is arranged on the rear side (11, 111) of the retroreflector element.

10. The retroreflector element (7, 7', 107) according to Claim 9, wherein the structure has relief-type depressions or elevations introduced deliberately into individual lateral surfaces of the triple (15, 115) on the rear side (13, 113).

11. The retroreflector element (7, 7', 107) according to Claim 10, wherein the depressions or elevations are made cylindrical.

12. The retroreflector element (7, 7', 107) according to any one of Claims 1 to 11, wherein the structure (19, 119) is designed such that the retroreflected beam (21) forms a light cone having an emission angle between 0.5° and 5° after the expansion at the structure (19, 119).

13. The retroreflector element (7, 7', 107) according to any one of Claims 1 to 12, wherein the structure (19, 119) for expanding the retroreflected beam (21, 21') is describable by a regularly repeating mathematical function depending on the location on the front side (11, 111) or the rear side (13, 113) of the retroreflector element (7, 7', 107).

14. The retroreflector element (7, 7', 107) according to Claim 13, wherein a period length of the regularly repeating function is less by at least a factor of 2 than a key width of the triples (15, 115).

15. The retroreflector element (7, 7', 107) according to any one of Claims 1 to 12, wherein the structure (19, 119) for expanding the retroreflected beam is an irregular structure which diffusely scatters incident light.

16. A sensor arrangement (1) comprising
an emitting element (3),
a receiving element (5) arranged adjacent to the emitting element,
a retroreflector element (7, 7', 107) according to any one of the preceding claims,
and a signal processing element (9).

## Revendications

1. Elément rétroréflecteur (7, 7', 107) destiné à être utilisé dans une zone proche et dans une zone éloignée d'un agencement de capteur (1),
comprenant un côté d'entrée de lumière comme face avant (11, 111) et une face arrière (13, 113) disposée à distance du côté d'entrée de lumière, dans lequel sur la face arrière (13, 113) est prévu un agencement régulier d'une pluralité de triples (15, 115) qui présentent respectivement trois surfaces latérales presque perpendiculaires les unes par rapport autres, dans lequel les arêtes de chaque triple (15, 115) présentent une projection sur la face avant (11, 111) et/ou sur la face arrière (13, 113) sous la forme d'un hexagone équilatéral, d'un carré ou d'un rectangle, et dans lequel les angles entre les surfaces latérales divergent au maximum d'angles droits de telle sorte qu'au moins 90 % de la lumière qui n'est pas incidente sur la structure (19, 119) sur sa trajectoire de faisceau, sont émis par rétroréflexion à l'intérieur d'un cône lumineux avec un angle de rayonnement inférieur à 20 minutes d'arc,
**caractérisé en ce qu'**au maximum 20 % de la surface de la face avant (11, 111) ou de la face arrière (13, 113) présentent une structure (19, 119) d'élargissement d'un faisceau rétroréfléchi (21, 21').

2. Elément rétroréflecteur (7, 7', 107) selon la revendication 1, dans lequel au minimum 0,1 % et au maximum 10 % de la superficie de la face avant (11, 111) ou de la face arrière (13, 113) de l'élément rétroréflecteur (7, 7', 107) sont couverts par la structure (19, 119) d'élargissement du faisceau rétroréfléchi (21, 21').

3. Elément rétroréflecteur (7, 7', 107) selon la revendication 1 ou 2, dans lequel au moins une première zone (17) est prévue qui présente la structure (19, 119) d'élargissement du faisceau rétroréfléchi (21, 21'), et au moins une deuxième zone est prévue dans laquelle aucune structure d'élargissement de faisceau n'est prévue.

4. Elément rétroréflecteur (7, 7', 107) selon la revendication 3, dans lequel la première zone (17) munie de la structure (19, 119) est une zone centrale de l'élément rétroréflecteur (7, 7', 107).

5. Elément rétroréflecteur (7, 7', 107) selon la revendication 1 ou 2, dans lequel la structure (19, 119) est répartie selon un motif sur la face avant (11, 111) ou la face arrière (13, 113) de l'élément rétroréflecteur (7, 7', 107).

6. Elément rétroréflecteur (7, 7', 107) selon l'une quelconque des revendications 1 à 5, dans lequel la structure d'élargissement du faisceau rétroréfléchi est disposée sur la face avant (11, 111) de l'élément rétroréflecteur.

7. Elément rétroréflecteur (7, 7', 107) selon la revendication 6, dans lequel une surface de projection sur la face avant (11, 111) est associée à chaque triple (15, 115), dans lequel chaque surface de projection est couverte au moins partiellement par la structure (19, 119) .

8. Elément rétroréflecteur (7, 7', 107) selon la revendication 7, dans lequel la surface de projection associée à chaque triple sur la face avant peut être divisée en trois surfaces de projection partielles, dans lequel chaque surface de projection partielle correspond à la projection d'une surface latérale du triple, et une seule surface de projection partielle par triple est couverte par la structure (21, 21') d'élargissement du faisceau rétroréfléchi (21, 21').

9. Elément rétroréflecteur (7, 7', 107) selon l'une quelconque des revendications 1 à 5, dans lequel la structure d'élargissement du faisceau rétroréfléchi est disposée sur la face arrière (11, 111) de l'élément rétroréflecteur.

10. Elément rétroréflecteur (7, 7', 107) selon la revendication 9, dans lequel la structure présente des creux ou des bossages de type relief, intégrés de manière ciblée dans des surfaces latérales individuelles des triples (15, 115) sur la face arrière (13, 113).

11. Elément rétroréflecteur (7, 7', 107) selon la revendication 10, dans lequel les creux ou bossages sont cylindriques.

12. Elément rétroréflecteur (7, 7', 107) selon l'une quelconque des revendications 1 à 11, dans lequel la structure (19, 119) est configurée de telle sorte que le faisceau rétroréfléchi (21) forme après l'élargissement au niveau de la structure (19, 119) un cône lumineux avec un angle de rayonnement compris entre 0,5° et 5°.

13. Elément rétroréflecteur (7, 7', 107) selon l'une quelconque des revendications 1 à 12, dans lequel la structure (19, 119) d'élargissement du faisceau rétroréfléchi (21, 21') peut être décrite par une fonction mathématique périodique en fonction de l'endroit sur la face avant (11, 111) ou de la face arrière (13, 113) de l'élément rétroréflecteur (7, 7', 107).

14. Elément rétroréflecteur (7, 7', 107) selon la revendication 13, dans lequel une longueur de période de la fonction périodique est inférieure au moins d'un facteur 2 à l'ouverture des triples (15, 115).

15. Elément rétroréflecteur (7, 7', 107) selon l'une quelconque des revendications 1 à 12, dans lequel la structure (19, 119) d'élargissement du faisceau rétroréfléchi est une structure irrégulière qui diffuse la lumière incidente.

16. Agencement de capteur (1) comprenant
un élément émetteur (3),
un élément récepteur (5) disposé à côté de l'élément émetteur,
un élément rétroréflecteur (7, 7', 107) selon l'une quelconque des revendications précédentes, et
un élément de traitement de signal (9).
